# EUROPÄISCHE PATENTSCHRIFT

(11) **EP 2 419 205 B1**
(45) Veröffentlichungstag und Bekanntmachung des Hinweises auf die Patenterteilung: **26.10.2016**
(21) Anmeldenummer: 10713456.1
(22) Anmeldetag: 13.04.2010
(51) Int. Cl.: B01J 13/14, C11D 3/50

(54) **TRÄGERSYSTEM FÜR DUFTSTOFFE**
CARRIER SYSTEM FOR FRAGRANCES
SYSTÈME SUPPORT POUR PARFUMS

(30) Priorität: 17.04.2009 EP 09158186
(43) Veröffentlichungstag der Anmeldung: 22.02.2012
(73) Patentinhaber: BASF SE, 67056 Ludwigshafen am Rhein (DE)
(72) Erfinder: LAUBENDER, Matthias, 67105 Schifferstadt (DE); BENLAHMAR, Ouidad, 68163 Mannheim (DE); ETTL, Roland, 68804 Altlußheim (DE)
(86) Internationale Anmeldenummer: PCT/EP2010/054791
(87) Internationale Veröffentlichungsnummer: WO 2010/119020

(56) Entgegenhaltungen:
- EP-A2- 1 797 946
- WO-A1-2005/105291
- WO-A1-2008/151941
- WO-A1-2009/090169
- WO-A2-01/49817
- DE-A1- 10 209 222
- FR-A1- 2 774 390

## Beschreibung

Die vorliegende Erfindung betrifft ein Trägersystem für Duftstoffe, dessen Herstellung und die Verwendung des Trägersystems in verschiedenen technischen Bereichen.

Zum Schutz von wertvollen chemischen Verbindungen wie Farbstoffen, Arznei- und Pflanzenschutzmitteln, Enzymen aber auch Duft- oder Riechstoffen während der Lagerung vor der beabsichtigten Verwendung wird vermehrt der Einsatz von Mikrokapseln erwogen bzw. bereits praktiziert. Diese Mikrokapseln ermöglichen es, den wertvollen Wirkstoff bereits relativ homogen in einer Einsatzmischung verteilt bereitzustellen, ohne ihn den anderen Bestandteilen während der Lagerung aussetzen zu müssen. Durch geeignete Wahl der Schale der Kapsel kann auf diese Weise unter anderem auch eine verzögerte Freisetzung erzielt werden.

So beschreibt zum Beispiel EP 0 457 154 eine Schale aus Polymer, genauer aus 30 bis 100 Massen% Alkylester von Acrylsäure oder Methacrylsäure und 0 bis 80 Massen% eines bi- oder polyfunktionellen Monomers sowie 0 bis 40 Massen% sonstiger vinylischer Monomere zur Verkapselung von Farbträgern. Diese Farbträger zeichnen sich durch eine geringe Flüchtigkeit aus.

WO 05/105291 offenbart eine Schale aus Polymer aus 5 bis 90 Massen% wasserlöslichen Monomeren wie Acrylsäure oder Methacrylsäure, 5 bis 90 Massen% eines bi- oder polyfunktionellen Monomers und 0 bis 55 Massen% wenig wasserlösliche Monomere wie Alkylester von Acrylsäure oder Methacrylsäure. Sie dient der Verkapselung von Paraffinen, d.h. ebenfalls von schwerflüchtigen Substanzen, zur Beschichtung von Textilien direkt im Spinnprozess.

Auch die WO 08/058868, die eine Schale aus einem Polymer aus 1 bis 95 Massen% wasserlöslichen Monomeren wie Acrylsäure oder Methacrylsäure, 5 bis 99 Massen% eines bi- oder polyfunktionellen Monomers und 0 bis 60 Massen% wenig wasserlösliche Monomeren wie Alkylestern von Acrylsäure oder Methacrylsäure offenbart, dient dazu einen schwer flüchtigen Stoff, namentlich ein Paraffin einzuschließen.

In der WO 2009/090169 werden ebenfalls Duft- oder Riechstoff enthaltende Mikrokapseln beschrieben, deren Schale durch Polymerisation von einem oder mehreren C₁-C₂₄-Alkylestern der (Meth)acrylsäure und mindestens zwei verschiedenen bi- oder polyfunktionellen Monomeren erhältlich ist.

Für eine Verwendung von Mikrokapseln zur Konservierung von leicht flüchtigen chemischen Verbindungen, wie es z.B. viele Duft- oder Riechstoffe sind, für Anwendungen in Wasch- und Reinigungsmitteln sowie zur Wäsche- und Oberflächenbehandlung müssen die Kapseln den leicht flüchtigen Stoff aber besonders gut einschließen. Es war daher eine Aufgabe der vorliegenden Erfindung eine Mikrokapsel mit verbesserter Dichtigkeit für leicht flüchtige Substanzen bereitzustellen.

Diese Aufgabe wurde überraschend gelöst durch die Mikrokapseln nach Anspruch 1 bis 5; eine chemische Zusammensetzung diese enthaltend gemäß Ansprüchen 6 und 7 sowie die Verwendungen gemäß Ansprüchen 8 bis 11 und die Mikrokapseln aufweisenden Gegenstände gemäß Ansprüchen 12 und 13 bilden weitere Bestandteile der vorliegenden Erfindung.

Entsprechend wird die Aufgabe gelöst durch eine Mikrokapsel, umfassend einen Kern a), der einen Duft- oder Riechstoff enthält, und eine Schale b), wobei b) erhältlich ist durch Polymerisation von einem oder mehreren C₁-C₂₄-Alkylester/n der Acryl- und/oder Methacrylsäure und MAS, wobei das MAS in einer Menge von 20 bis 60 Massen% in der Schale vorliegt, und mindestens einer der folgenden Komponenten:
PETIA in einer Menge von 10 bis 50 Massen% und/oder
EGDMA in einer Menge von 10 bis 50 Massen%, wobei die (Gesamt-)Menge von PETIA und EGDMA mindestens 30 Massen% in der Schale einpolymerisiert vorliegt.

Dabei bedeuten:
- MMA: Methylmethacrylat
- MAS: Methacrylsäure
- PETIA: Pentaerythrittriacrylat
- EGDMA: Ethylenglycoldimethacrylate
- DMAEMA: Dimethylaminoethylmethacrylat.

Unter einem Duft- oder Riechstoff werden alle organischen Substanzen verstanden, die eine gewünschte olfaktorische Eigenschaft aufweisen und im Wesentlichen nicht toxisch sind. Hierzu zählen u. a. alle üblicherweise in Wasch- oder Reinigungsmittelzusammensetzungen oder in der Parfümerie verwendeten Duft- oder Riechstoffe. Es kann sich um Verbindungen natürlichen, halbsynthetischen oder synthetischen Ursprungs handeln. Bevorzugte Duft- oder Riechstoffe können den Substanzklassen der Kohlenwasserstoffe, Aldehyde oder Ester zugeordnet werden. Zu den Duft- oder Riechstoffen zählen auch natürliche Extrakte und/oder Essenzen, die komplexe Gemische von Bestandteilen enthalten können, wie Orangenöl, Zitronenöl, Rosenextrakt, Lavendel, Moschus, Patschuli, Balsamessenz, Sandelholzöl, Pinienöl und Zedernöl.

Nicht einschränkende Beispiele synthetischer und halbsynthetischer Duft- oder Riechstoffe sind : 7-Acetyl-1,2,3,4,5,6,7,8-octahydro-1,1,6,7-tetramethyl-naphthalin, α-Ionon, ss-Ionon, γ-Ionon, α-Isomethylionon, Methylcedrylketon, Methyldihydrojasmonat, Methyl-1,6,10-trimethyl-2,5,9-cyclododecatrien-1-yl-keton, 7-Acetyl-1,1,3,4,4,6-hexamethyl-tetralin, 4-Acetyl-6-tert-btyl-1,1-dimethyl-indan, Hydroxyphenylbutanon, Benzophenon, Methyl-ss-naphthyl-keton, 6-Acetyl-1,1,2,3,3,5-hexamethyl-indan, 5-Acetyl-3-isopropyl-1,1,2,6-tetramethyl-indan,1-Dodecanal, 4-(4-Hydroxy-4-methylpentyl)-3-cyclohexen-I-carboxaldehyd, 7-Hydroxy-3,7-dimethyloctanal, 10-Undecen-1-al, iso-Hexenyl-cyclohexyl-carboxaldehyd, Formyl-tricyclodecan, Kondensationsprodukte von Hydroxycitronellal und Methylanthranilat, Kondensationsprodukte von Hydroxycitronellal und Indol, Kondensationsprodukte von Phenyl-acetaldehyd und Indol, 2-Methyl-3-(para-*tert*-butylphenyl)-propionaldehyd, Ethylvanillin, Heliotropin, Hexylzimtaldehyd, Amylzimtaldehyd, 2-Methyl-2-(-isopropylphenyl)-propionaldehyd, Cumarin, Decalacton-y, Cyclopentadecanolid, 16-Hydroxy-9-hexadecensäure-lacton, 1,3,4,6,7,8-Hexahydro-4,6,6,7,8,8-hexamethylcyclopenta-y-2-benzopyran, ss-Naphthol-methylether, Ambroxan, Dodecahydro-3a,6,6,9a,tetramethyl-naphtho[2,Ib]furan, Cedrol, 5-(2,2,3-Trimethylcyclopent-3-enyl)-3-methylpentan-2-ol, 2-Ethyl-4-(2,2,3-trimethyl-3-cyclopenten-1-yl)-2-buten-1-ol, Caryophyllenalkohol, Tricyclodecenylpropionat, Tricyclodecenylacetat, Benzylsalicylat, Cedrylacetat und tert-Butyl-cyclohexylacetat.

Weitere Beispiele für erfindungsgemäß einsetzbare Duft- oder Reichstoffe sind beispielsweise in US 6,143,707, US 5,089,162, EP 1 360 270 und WO 2009/027957 beschrieben.

Besonders bevorzugt sind: Hexylzimtaldehyd, 2-Methyl-3-(-*tert*-butylphenyl)-propionaldehyd, 7-Acetyl-1,2,3,4,5,6,7,8-octahydro-1,1,6,7-tetramethyl-naphthalin, Benzylsalicylat, 7-Acetyl-1,1,3,4,4,6-hexamethyl-tetralin, para-*tert*-butyl-cyclohexylacetat, Methyldihydro-jasmonat, ss-Naphthol-methylether, Methyl-ss-naphthylketon, 2-Methyl-2-(para-iso-propylphenyl)-propio-aldehyd, 1,3,4,6,7,8-Hexahydro-4,6,6,7,8,8-hexamethyl-cyclpenta-y-2-benzopyran, Dodecahydro-3a,6,6,9a-tetramethylnaphtho[2,Ib]furan, Anisaldehyd, Cumarin, Cedrol, Vanillin, Cyclopentadecanolid, Tricyclodecenylacetat und Tricyclodecenylpropionate.

Andere Duftstoffe sind ätherische Öle, Resinoide und Harze aus einer Vielzahl von Quellen, wie Perubalsam, Olibanum Resinoid, Styrax, Labdanumharz, Muskat, Cassiaöl, Benzoinharz, Koriander und Lavandin. Weitere geeignete Duftstoffe sind: Phenylethylalkohol, Terpineol, Linalool, Linalyl Acetat, Geraniol, Nerol, 2-(1,1-dimethylethyl)-cyclohexanolacetat, Benzylacetat und Eugenol.

Die Duft- oder Riechstoffe können als Reinsubstanzen oder im Gemisch untereinander eingesetzt werden. Der Duft- oder Riechstoff kann als alleiniges hydrophobes Material den Kern der Mikrokapseln bilden. Alternativ können die Mikrokapseln neben dem Duft- oder Riechstoff ein weiteres hydrophobes Material enthalten, in dem der Duftoder Riechstoff gelöst oder dispergiert ist. So ist z. B. bei Verwendung von bei Raumtemperatur festen Duft- oder Riechstoffen der Einsatz eines bei Raumtemperatur flüssigen hydrophoben Materials als Lösungs- oder Dispergiermittel von Vorteil.

Ebenso kann zur Erhöhung der Hydrophobie eines Duft- oder Riechstoffs diesem Duft- oder Riechstoff ein weiteres hydrophobes Material beigefügt werden.

Vorzugsweise macht der Duft- oder Riechstoff oder das Gemisch von Duft- oder Riechstoffen 1 bis 100 Massen%, vorzugsweise 20 bis 100 Massen% des hydrophoben Kernmaterials aus. Das hydrophobe Material ist bei Temperaturen unter 100 °C, vorzugsweise bei Temperaturen unterhalb 60 °C und besonders bevorzugt bei Raumtemperatur flüssig.

Unter C1-C24-Alkylester/n der Acryl- und/oder Methacrylsäure werden allgemein nicht nur die reinen Alkylester verstanden, sondern auch modifizierte Verbindungen, wie Alkylamide der Acrylsäure oder Vinylalkylether. Nichtabschließende Beispiele sind: *tert*.-Butylacrylamid und Acrylamid.

Darüber hinaus existieren natürlich bevorzugte Ausführungsformen, so ist eine Mikrokapsel bevorzugt, bei der die Schale einen C₁-C₂₄-Alkylester der Acryl- und/oder Methacrylsäure und
MAS in einer Menge von 25 bis 50 Massen% und/oder
PETIA in einer Menge von 20 bis 40 Massen% und/oder
EGDMA in einer Menge von 20 bis 40 Massen% einpolymerisiert enthält.

Noch bevorzugter ist eine Mikrokapsel, bei der der C₁-C₂₄-Alkylester der Acryl- und/oder Methacrylsäure Methylmethacrylat ist und
MAS in einer Menge von 35 bis 45 Massen% und/oder
PETIA in einer Menge von 25 bis 35 Massen% und/oder
EGDMA in einer Menge von 25 bis 35 Massen% in die Schale einpolymerisiert ist.

Die erfindungsgemäßen Mikrokapseln weisen den Vorteil auf, leicht flüchtige Stoffe gut vor Verdampfung zu schützen.

Ein weiterer Gegenstand der vorliegenden Erfindung ist daher eine Mikrokapsel, umfassend einen Kern a), der einen Duft- oder Riechstoff enthält, und eine Schale b), wobei b) erhältlich ist durch Polymerisation von einem oder mehreren C1-C24-Alkylester/n der Acryl- und/oder Methacrylsäure und wobei die Mikrokapsel eine Verdampfungsrate gemessen nach dem "VerdampfungsrateTest" von weniger als 10 Massen% aufweist.

Beim "VerdampfungsrateTest" wird das Gewicht einer trockenen Probe (ca. 1 g) zunächst bei Raumtemperatur bestimmt. Die Probe wird dann eine Stunde lang bei 130 °C getempert. Anschließend wird sie erneut bei Raumtemperatur gewogen. Der so ermittelte Massenverlust im Verhältnis zur Gesamtmasse der trockenen Probe multipliziert mit 100 ergibt die Verdampfungsrate, die in % angegeben wird.

Zur Messung wird eine Probenmenge verwendet, die groß genug ist, um mit der verwendeten Waage zu Massenverlust-Ergebnissen zu gelangen, die mindestens um den Faktor 10 außerhalb der Fehlergrenzen der Waage liegen. Die verwendete Probenmenge ist weiterhin so zu wählen, dass die Masse der Probe größer ist als die des Gefäßes, in welchem die Probe in den Ofen gebracht wird, die spezifische Wärmekapazität des Gefäßes soll < 1000 J/(kg·K) betragen, dies kann z.B. durch Verwendung einer Aluminiumschale erreicht werden. Das Gewicht der Aluminiumschale beträgt üblicherweise ca. 1 bis 2 g.

Liegt nicht bereits eine trockene Probe vor, so wird zunächst 1,5 bis 2,0 g Dispersion, z.B. wie sie bei der Herstellung erhalten wird, bei 105 °C über 2h getrocknet, um das Wasser zu entfernen. Dann wird das Gewicht der getrockneten Probe wie oben beschrieben ermittelt.

Entsprechend besonders bevorzugt ist eine Mikrokapsel wie oben beschrieben, wobei die Mikrokapsel eine Verdampfungsrate gemessen nach dem "VerdampfungsrateTest" von weniger als 10 Massen% aufweist.

Derartige Mikrokapseln sind durch Polymerisation des die Schale bildenden Monomers oder Monomergemisches in der Ölphase einer stabilen Öl-in-Wasser-Emulsion erhältlich, wobei die Ölphase aus einem hydrophoben Material besteht. Vor dem Start der Polymerisation muss eine Mischung aus Monomeren und hydrophober Phase vorliegen, die wenigstens einen Duft- oder Riechstoff enthält. Dieses Herstellungsverfahren ist an sich bekannt und z. B. in der EP-A-0 457 154 beschrieben.

Zu den hydrophoben Materialien, die für die Ölphase eingesetzt werden können, zählen alle Arten von Ölen, wie Pflanzenöle, tierische Öle, Mineralöle, Paraffine, Chlorparaffine, Fluorkohlenwasserstoffe und andere synthetische Öle.
Typische und nicht abschließende Beispiele sind Sonnenblumenöl, Rapsöl, Olivenöl, Erdnussöl, Sojaöl, Kerosin, Benzol, Toluol, Butan, Pentan, Hexan, Cyclohexan, Chloroform, Tetrachlorkohlenstoff, chlorierte Diphenyle und Silikonöl. Es können auch hydrophobe Materialien mit hohem Siedepunkt verwendet werden, z. B. Diethylphthalat, Di-butylphthalat, Diisohexylphthalat, Dioctylphthalat, Alkylnaphthalin, Dodecylbenzol, Terphenyl, teilweise hydrierte Terphenyle, Ethylhexyl Palmitate, Capric/Caprylic-Triglyceride, PPG-2 Myristyl Ether Propionate; PPG-5 Ceteth-20; C₁₂-₁₅-Alkyl-Benzoate, Mineral Oil (CAS: 8042-47-5); Cetearyl Ethylhexanoate; Dimethicone; Polyisobutylene (z. B. BASF: Glisopal ®, Oppanol ®).

Das gegebenenfalls den Duft- oder Riechstoff enthaltende oder daraus bestehende hydrophobe Material wird so gewählt, dass es sich bei Temperaturen zwischen seinem Schmelzpunkt und dem Siedepunkt von Wasser in Wasser emulgieren lässt. Niederviskose hydrophobe Materialien weisen dabei eine Brookfield-Viskosität < 5 Pa*s auf (gemessen bei 23 °C mit einer 5er-Spindel und 20 U/s nach DIN EBN ISO 3219).

Der Kern der Mikrokapseln wird von dem in Wasser emulgierbaren hydrophoben Material gebildet. Das hydrophobe Material dient gleichzeitig als Lösungs- oder Dispergiermittel für das bei der Herstellung der Kapselhülle durch Polymerisation eingesetzte Monomergemisch. Die Polymerisation findet dann in der Ölphase einer stabilen Öl-in-Wasser-Emulsion statt. Diese Emulsion erhält man, indem man beispielsweise zunächst die Monomeren und einen Polymerisationsinitiator sowie gegebenenfalls einen Polymerisationsregler in dem hydrophoben Material löst und die so erhaltene Lösung in einem wässrigen Medium mit einem Emulgator und/oder Schutzkolloid emulgiert. Man kann jedoch auch zunächst die hydrophobe Phase oder Bestandteile davon in der wässrigen Phase emulgieren und dann zur Emulsion die Monomeren oder den Polymerisationsinitiator sowie die gegebenenfalls noch mit zu verwendenden Hilfsstoffe, wie Schutzkolloide oder Polymerisationsregler zugeben.

Bei einer anderen Verfahrensvariante kann man auch das hydrophobe Material und die Monomeren in Wasser emulgieren und anschließend nur noch den Polymerisationsinitiator zugeben. Da das hydrophobe Material in der Emulsion möglichst vollständig mikroverkapselt werden soll, werden vorzugsweise nur solche hydrophobe Materialien eingesetzt, deren Löslichkeit in Wasser begrenzt ist. Die Löslichkeit sollte vorzugsweise 5 Gew.-% nicht übersteigen. Für eine vollständige Verkapselung des hydrophoben Materials in der Ölphase der Öl-in-Wasser-Emulsion ist es zweckmäßig, die Monomeren entsprechend ihrer Löslichkeit im hydrophoben Material auszuwählen. Während die Monomeren im Öl im Wesentlichen löslich sind, entstehen daraus bei der Polymerisation in den einzelnen Öltröpfchen Oligo- und Polymere, die weder in der Ölphase noch in der Wasserphase der ÖI-in-Wasser-Emulsion löslich sind und an die Grenzfläche zwischen den Öltröpfchen und der Wasserphase wandern. Dort bilden sie im Verlauf der weiteren Polymerisation das Wandmaterial, das schließlich das hydrophobe Material als Kern der Mikrokapseln umhüllt.

Zur Ausbildung einer stabilen Öl-in-Wasser-Emulsion werden in der Regel Schutzkolloide und/oder Emulgatoren verwendet. Geeignete Schutzkolloide sind z. B. Cellulosederivate, wie Hydroxyethylcellulose, Carboxymethylcellulose und Methylcellulose, Polyvinylpyrrolidon und Copolymere des N-Vinylpyrrolidons, Polyvinylalkohole und partiell hydrolysierte Polyvinylacetate. Besonders bevorzugt sind dabei die Polyvinylalkohole. Daneben sind auch Gelatine, Gummi Arabicum, Xanthangummi, Alginate, Pectine, abgebaute Stärken und Kasein einsetzbar. Auch ionische Schutzkolloide können Verwendung finden. Als ionische Schutzkolloide lassen sich PolyAcrylsäure, PolymethAcrylsäure, Copolymerisate aus Acrylsäure und Methacrylsäure, sulfonsäuregruppenhaltige wasserlösliche Polymere mit einem Gehalt an Sulfoethylacrylat, Sulfoethylmethacrylat oder Sulfopropylmethacrylat, sowie Polymerisate von N-(Sulfoethyl)-maleinimid, 2-Acrylamido-2-alkylsulfonsäuren, Styrolsulfonsäuren und Formaldehyd sowie Kondensate aus Phenolsulfonsäuren und Formaldehyd verwenden. Die Schutzkolloide werden im Allgemeinen in Mengen von 0,1 bis 10 Massen%, bezogen auf die Wasserphase der Emulsion, zugesetzt. Die als ionische Schutzkolloide verwendeten Polymerisate haben vorzugsweise mittlere Molmassen M_{w} von 500 bis 1.000.000 g/mol, vorzugsweise 1.000 bis 500.000 g/mol.

Die Polymerisation erfolgt in der Regel in Gegenwart von Radikale bildenden Polymerisationsinitiatoren. Hierfür können alle üblichen Peroxo- und Azoverbindungen in den üblicherweise eingesetzten Mengen, z. B. von 0,1 bis 5 Massen%, bezogen auf die Masse der zu polymerisierenden Monomere, verwendet werden. Bevorzugt sind solche Polymerisationsinitiatoren, die in der Ölphase oder in den Monomeren löslich sind. Beispiele dafür sind t-Butylperoxyneodecanoat, t-Butylperoxypivalat, t-Amylperoxypivalat, Dilauroylperoxid, t-Amylperoxy-2-ethylhexanoat und dergleichen.

Die Polymerisation der Öl-in-Wasser-Emulsion wird üblicherweise bei 20 bis 100 °C, vorzugsweise bei 40 bis 90 °C, durchgeführt. Üblicherweise wird die Polymerisation bei Normaldruck vorgenommen, kann jedoch auch bei vermindertem oder erhöhtem Druck erfolgen, z. B. im Bereich von 0,5 bis 20 bar. Zweckmäßigerweise geht man so vor, dass man eine Mischung aus Wasser, Schutzkolloid und/oder Emulgatoren, hydrophoben Materialien, Polymerisationsinitiatoren und Monomeren mit einem schnelllaufenden Dispergator auf die gewünschte Tröpfchengröße des hydrophoben Materials emulgiert und die stabile Emulsion unter Rücksicht auf die Zerfallstemperatur des Polymerisationsinitiators erhitzt. Die Geschwindigkeit der Polymerisation kann dabei durch die Wahl der Temperatur und der Menge des Polymerisationsinitiators in bekannter Weise gesteuert werden. Nach Erreichen der Polymerisationstemperatur setzt man die Polymerisation zweckmäßigerweise noch weitere Zeit, z. B. 2 bis 6 Stunden lang fort, um den Umsatz der Monomeren zu vervollständigen.

Besonders bevorzugt ist eine Arbeitsweise, bei der man während der Polymerisation die Temperatur des polymerisierenden Reaktionsgemisches kontinuierlich oder periodisch variiert, z.B. kontinuierlich oder periodisch erhöht. Dies geschieht beispielsweise mit Hilfe eines Programms mit ansteigender Temperatur.

Die gesamte Polymerisationszeit kann zu diesem Zweck in zwei oder mehr Perioden unterteilt werden. Die erste Polymerisationsperiode ist durch einen langsamen Zerfall des Polymerisationsinitiators gekennzeichnet. In der zweiten Polymerisationsperiode und gegebenenfalls weiteren Polymerisationsperioden wird die Temperatur der Reaktionsmischung erhöht, um den Zerfall der Polymerisationsinitiatoren zu beschleunigen. Die Temperatur kann in einem Schritt oder in mehreren Schritten oder kontinuierlich in linearer oder nichtlinearer Weise erhöht werden. Die Temperaturdifferenz zwischen dem Beginn und dem Ende der Polymerisation kann bis zu 50 °C betragen. Im Allgemeinen beträgt diese Differenz 3 bis 40 °C, vorzugsweise 3 bis 30 °C.

Die nach einer der vorstehend geschilderten Vorgehensweisen erhaltenen Mikrokapseldispersionen können anschließend in üblicher Weise sprühgetrocknet werden. Zur Erleichterung der Redispergierung der sprühgetrockneten Mikrokapseln können den Dispersionen vor der Sprühtrocknung gegebenenfalls zusätzliche Mengen an Emulgator und/oder Schutzkolloid zugegeben werden. Geeignete Emulgatoren beziehungsweise Schutzkolloide sind die vorstehend im Zusammenhang mit der Herstellung der Mikrokapseldispersion genannten. Im Allgemeinen wird die wässrige Mikrokapseldispersion in einem Warmluftstrom zerstäubt, der im Gleich- oder Gegenstrom, vorzugsweise im Gleichstrom, mit dem Sprühnebel geführt wird. Die Eingangstemperatur des Warmluftstroms liegt üblicherweise im Bereich von 100 bis 200 °C, vorzugsweise 120 bis 160 °C, und die Ausgangstemperatur des Luftstroms liegt im Allgemeinen im Bereich von 30 bis 90 °C, vorzugsweise 60 bis 80 °C. Das Versprühen der wässrigen Mikrokapseldispersion kann beispielsweise mittels Ein- oder Mehrstoffdüsen oder über eine rotierende Scheibe erfolgen.
Die Abscheidung der sprühgetrockneten Mikrokapseln erfolgt normalerweise unter Verwendung von Zyklonen oder Filterabscheidern.

Die so erhältlichen Mikrokapseln haben vorzugsweise einen mittleren Durchmesser im Bereich von 1 bis 100 µm, besonders bevorzugt von 1 bis 50 µm und ganz besonders bevorzugt von 1 bis 30 µm.

Auf Grund der vorgesehenen Verwendung ergibt sich auch für das Verhältnis von Dicke der Schale zum Durchmesser der Kapsel ein bevorzugter Bereich. So ist eine Mikrokapsel bevorzugt, bei der das Verhältnis der Dicke der Schale zum Durchmesser der Mikrokapsel im Bereich von 0,0005 bis 0,2 liegt, besonders bevorzugt im Bereich von 0,005 bis 0,08 und ganz besonders bevorzugt von 0,015 bis 0,055.

Weiterer Gegenstand der vorliegenden Erfindung ist eine chemische Zusammensetzung enthaltend Mikrokapseln wie sie oben beschrieben sind. So können die flüssigen Mikrokapselzubereitungen oder sprühgetrockneten Mikrokapseln insbesondere zur Formulierung von Wasch- oder Reinigungsmitteln verwendet werden. Sie können aber auch zur Formulierung von z. B. Klebstoffen, Farben, Kosmetika, Deodorantien, Repellents und Dispersionen verwendet werden.

Besonders bevorzugt ist eine chemische Zusammensetzung, die mindestens einen Stoff enthält, der ausgewählt ist aus der Gruppe bestehend aus Tensiden, Desinfektionsmitteln, Farbstoffen, Säuren, Basen, Komplexbildnern, Bioziden, Hydrotropen, Verdickungsmittel, Buildern, Cobuildern, Enzymen, Bleichmitteln, Bleichaktivatoren, Korrosionsinhibitoren, Bleichkatalysatoren, Farbschutzadditiven, Farbübertragungsinhibitoren, Vergrauungsinhibitoren, Soil-Release-Polymeren, Faserschutzadditiven, Siliconen, Bakteriziden und Konservierungsmittel, organische Lösemittel, Löslichkeitsvermittler, Auflösungsverbesserer und Parfüm.

Tenside bestehen im Allgemeinen aus einem hydrophoben und aus einem hydrophilen Teil. Dabei weist der hydrophobe Teil im Allgemeinen eine Kettenlänge von 4 bis 20 C-Atomen, vorzugsweise 6 bis 19 C-Atomen und besonders bevorzugt 8 bis 18 C-Atomen auf. Die funktionelle Einheit der hydrophoben Gruppe ist im Allgemeinen eine OH-Gruppe, wobei der Alkohol verzweigt oder unverzweigt sein kann. Der hydrophile Teil besteht im Allgemeinen im Wesentlichen aus alkoxylierten Einheiten (z. B. Ethylenoxid (EO), Propylenoxid (PO) und/oder Butylenoxid (BO), wobei sich üblicherweise 2 bis 30, vorzugsweise 5 bis 20 dieser alkoxylierten Einheiten aneinanderreihen, und/oder geladenen Einheiten wie Sulfat, Sulfonat, Phosphat, Carbonsäuren, Ammonium und Amoniumoxid.

Beispiele für anionische Tenside sind: Carboxylate, Sulfonate, Sulfofettsäuremethylester, Sulfate, Phosphate. Beispiele für kationische Tenside sind: quartäre Ammoniumverbindungen. Beispiele für Betain-Tenside sind: Alkylbetaine. Beispiele für nichtionische Verbindungen sind: Alkoholalkoxylate.

Dabei wird unter einem "Carboxylat" eine Verbindung verstanden, die mindestens eine Carboxylat-Gruppe im Molekül aufweist. Beispiele für Carboxylate, die erfindungsgemäß verwendet werden können, sind
Seifen - z. B. Stearate, Oleate, Cocoate der Alkalimetalle oder des Ammoniums, Ethercarboxylate - z. B. Akypo® RO 20, Akypo® RO 50, Akypo® RO 90.

Unter einem "Sulfonat" wird eine Verbindung verstanden, die mindestens eine Sulfonat-Gruppe im Molekül aufweist. Beispiele für Sulfonate, die erfindungsgemäß verwendet werden können, sind
Alkylbenzolsulfonate - z. B. Lutensit® A-LBS, Lutensit® A-LBN, Lutensit® A-LBA, Marlon® AS3, Maranil® DBS,
Alkylsulfonate - z. B. Alscoap OS-14P, BIO-TERGE® AS-40, BIO-TERGE® AS-40 CG, BIO-TERGE® AS-90 Beads, Calimulse® AOS-20, Calimulse® AOS-40, Calsoft® AOS-40, Colonial® AOS-40, Elfan® OS 46, Ifrapon® AOS 38, Ifrapon® AOS 38 P, Jeenate® AOS-40, Nikkol® OS-14, Norfox® ALPHA XL, POLYSTEP® A-18, Rhodacal® A-246L, Rhodacal® LSS-40/A,
Sulfonierte Öle wie z.B. Türkischrotöl,
Olefinsulfonate,
aromatische Sulfonate - z.B. Nekal® BX, Dowfax® 2A1.

Dabei wird unter einem "Sulfofettsäuremethylester" eine Verbindung verstanden, die folgende Einheit der allgemeinen Formel (I) aufweist: 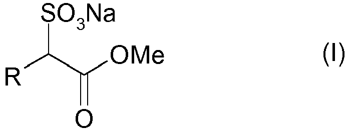 bei der R 10 bis 20 C-Atome aufweist; vorzugsweise weist R 12 bis 18 und besonders bevorzugt 14 bis 16 C-Atome auf.

Unter einem "Sulfat" wird dabei eine Verbindung verstanden, die mindestens eine SO₄-Gruppe im Molekül aufweist. Beispiele für Sulfate, die erfindungsgemäß verwendet werden können, sind
Fettalkoholsulfate wie z. B. Kokosfettalkoholsulfat (CAS 97375-27-4) - z. B. EMAL® 10G, Dispersogen® SI, Elfan® 280, Mackol® 100N,
andere Alkoholsulfate - z. B. Emal® 71, Lanette® E,
Kokosfettalkoholethersulfat - z. B. Emal® 20C, Latemul® E150, Sulfochem® ES-7, Texapon® ASV-70 Spec., Agnique SLES-229-F, Octosol 828, POLYSTEP® B-23, Unipol® 125-E, 130-E, Unipol® ES-40,
andere Alkoholethersulfate - z. B. Avanel® S-150, Avanel® S 150 CG, Avanel® S 150 CG N, Witcolate® D51-51, Witcolate® D51-53.

Unter einem "Phosphat" wird vorliegend eine Verbindung verstanden, die mindestens eine PO₄-Gruppe im Molekül aufweist. Beispiele für Phosphate, die erfindungsgemäß verwendet werden können, sind
Alkyletherphosphate - z. B. Maphos® 37P, Maphos® 54P, Maphos® 37T, Maphos® 210T und Maphos® 210P,
Phospaphate wie Lutensit A-EP,
Alkylphosphate.
Die anionischen Tenside werden bei der Herstellung der chemischen Zusammensetzung vorzugsweise in Form von Salzen zugegeben. Geeignete Salze sind dabei z. B. Alkalimetallsalze, wie Natrium-, Kalium- und Lithiumsalze, und Ammoniumsalze, wie Hydroxyethylammonium-, Di(hydroxy-ethyl)ammonium- und Tri(hydroxyethyl)ammoniumsalze.

Unter einer "quartären Ammoniumverbindung" wird eine Verbindung verstanden, die mindestens eine R₄N⁺-Gruppe im Molekül aufweist. Beispiele für quartäre Ammoniumverbindungen, die erfindungsgemäß verwendet werden können, sind Halogenide, Methosulfate, Sulfate und Carbonate von Kokosfett-, Talgfett- oder Cetyl/Oleyltrimethylammonium.

Als besonders geeignete kationische Tenside seien genannt:
- C₇-C₂₅-Alkylamine;
- N,N-Dimethyl-N-(hydroxy-C₇-C₂₅-alkyl)ammoniumsalze;
- mit Alkylierungsmitteln quaternisierte Mono- und Di-(C₇-C₂₅-alkyl)dimethylammoniumverbindungen;
- Esterquats, insbesondere quaternäre veresterte Mono-, Di- und Trialkanolamine, die mit C₈-C₂₂-Carbonsäuren verestert sind;
- Imidazolinquats, insbesondere 1-Alkylimidazoliniumsalze der Formeln II oder III 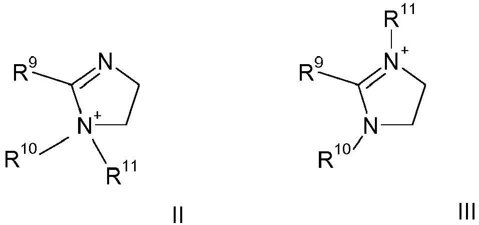 in denen die Variablen folgende Bedeutung haben:
   R⁹ C₁-C₂₅--Alkyl oder C₂-C₂₅--Alkenyl;
   R¹⁰ C₁-C₄-Alkyl oder Hydroxy-C₁-C₄-alkyl;
   R¹¹ C₁-C₄-Alkyl, Hydroxy-C₁-C₄-alkyl oder ein Rest R¹-(CO)-X-(CH₂)ₘ-(X:-O- oder -NH-; m: 2 oder 3),
   wobei mindestens ein Rest R⁹ C₇-C₂₂-Alkyl ist.
   Weiterhin wird unter einem "Betain-Tensid" eine Verbindung verstanden, die unter Anwendungsbedingungen, d. h. zum Beispiel im Falle der Textilwäsche unter Normaldruck und bei Temperaturen von Raumtemperatur bis 95°C, je mindestens eine positive und negative Ladung trägt. Ein "Alkylbetain" ist dabei ein Betain-Tensid, das mindestens eine Alkyl-Einheit im Molekül aufweist. Beispiele für Betain-Tenside, die erfindungsgemäß verwendet werden können, sind
   Cocamidopropylbetain - z. B. MAFO® CAB, Amonyl® 380 BA, AMPHOSOL® CA, AMPHOSOL® CG, AMPHOSOL® CR, AMPHOSOL® HCG; AMPHOSOL® HCG-50, Chembetaine® C, Chembetaine® CGF, Chembetaine® CL, Dehyton® PK, Dehyton® PK 45, Emery® 6744, Empigen® BS/F, Empigen® BS/FA, Empigen® BS/P, Genagen® CAB, Lonzaine® C, Lonzaine® CO, Mirataine® BET-C-30, Mirataine® CB, Monateric® CAB, Naxaine® C, Naxaine® CO, Norfox® CAPB, Norfox® Coco Betaine, Ralufon® 414, TEGO®-Betain CKD, TEGO® Betain E KE 1, TEGO®-Betain F, TEGO®-Betain F 50 und Aminoxide wie z.B. Alkyldimethylaminoxide, d. h. Verbindungen der allgemeinen Formel (IV) 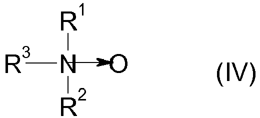
bei denen R¹, R² und R³ unabhängig voneinander für einen aliphatischen, cyclischen oder tertiären Alkyl- oder Amidoalkyl-Rest stehen, wie z. B. Mazox® LDA, Genaminox®, Aromox® 14 DW 970.

Nichtionische Tenside sind grenzflächenaktive Stoffe mit einer ungeladenen, im neutralen pH-Bereich keine Ionenladung tragenden, polaren, hydrophilen, wasserlöslich machenden Kopfgruppe (im Unterschied zu anionischen und kationischen Tensiden), die an Grenzflächen adsorbiert und oberhalb der kritischen Micellbildungskonzentration (cmc) zu neutralen Micellen aggregiert. Je nach Art der hydrophilen Kopfgruppe kann man unterscheiden zwischen (Oligo)oxyalkylen-Gruppen, insbesondere (Oligo)oxyethylen-Gruppen (Polyethylenglycol-Gruppen), wozu die Fettalkoholpolyglycolether (Fettalkoholalkoxylate), Alkylphenolpolyglycolether sowie Fettsäureethoxylate, alkoxylierte Triglyceride und Mischether (beidseitig alkylierte Polyethylenglycolether) zählen; und Kohlenhydrat-Gruppen, zu denen z. B. die Alkylpolyglucoside und Fettsäure-*N*-methylglucamide zählen.

Alkoholalkoxylate, basieren auf einem hydrophoben Teil mit einer Kettenlänge von 4 bis 20 C-Atomen, vorzugsweise 6 bis 19 C-Atomen und besonders bevorzugt 8 bis 18 C-Atomen, wobei der Alkohol verzweigt oder unverzweigt sein kann, und einem hydrophilen Teil, bei dem es sich um alkoxylierte Einheiten, z. B. Ethylenoxid (EO), Propylenoxid (PO) und/oder Butylenoxid (BuO), mit 2 bis 30 Wiederholungseinheiten handeln kann. Beispiele sind u.a. Lutensol ® XP, Lutensol ® XL, Lutensol ® ON, Lutensol ® AT, Lutensol ® A, Lutensol ® AO, Lutensol ® TO.

Alkoholphenolalkoxylate sind Verbindungen der allgemeinen Formel (V), 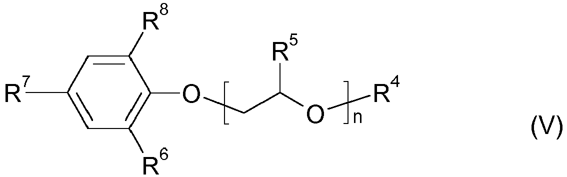 die durch Anlagerung von Alkylenoxid, vorzugsweise von Ethylenoxid an Alkylphenole hergestellt werden.

Dabei sind R⁶ und R⁸ sind verschieden oder vorzugsweise gleich und gewählt aus Alkyl, bevorzugt Methyl oder Ethyl, oder insbesondere Wasserstoff.

R⁷ ist gewählt aus linearen oder vorzugsweise verzweigten Alkylresten, unsubstituiert oder substituiert, insbesondere aus C₁-C₂₀-Alkylresten.

Vorzugsweise ist R⁴ = H. Bevorzugt ist es außerdem, wenn R⁵ = H ist, - es sich somit um EO handelt; ebenso ist es bevorzugt, wenn R⁵ = CH₃ ist, es sich also um PO handelt, oder, wenn R⁵ = CH₂CH₃ ist und es sich um BuO handelt.

Besonders bevorzugt ist außerdem eine Verbindung, in der Octyl- [(R¹ = R³ = H, R² = 1,1,3,3-Tetramethylbutyl (Diisobutylen)], Nonyl- [(R¹ = R³ = H, R² = 1,3,5-Trimethylhexyl (Tripropylen)], Dodecyl-, Dinonyl- oder Tributylphenolpolyglycolether (z. B. EO, PO, BuO), R⁷-C₆H₄-O-(EO/PO/BuO)n mit R⁷ = C₈ bis C₁₂ und n = 5 bis 10, vorliegen. Nichtabschließende Beispiele für derartige Verbindungen sind: Norfox® OP-102, Surfonic® OP-120, T-Det® O-12.

Fettsäureethoxilate sind mit unterschiedlichen Mengen Ethylenoxid (EO) nachbehandelte Fettsäureester.

Triglyceride sind Ester des Glycerols (Glyceride), in denen alle drei Hydroxy-Gruppen mit Fettsäuren verestert sind. Diese können mit Alkylenoxid modifiziert werden.

Fettsäurealkanolamide sind Verbindungen der allgemeinen Formel (VI) 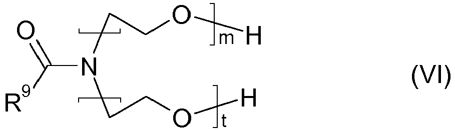 die mindestens eine Amid-Gruppe mit einem Alkylrest R⁹ und einen oder zwei Alkoxylrest(e) aufweist, wobei R⁹ 11 bis 17 C-Atome umfasst und 1 ≤ m + t ≤ 5 ist.

Alkylpolyglycoside sind Gemische aus Alkylmonoglucosid (Alkyl- α-D- und - β-D-glucopyranosid sowie geringen Anteilen -glucofuranosid), Alkyldiglucosiden (-isomaltosiden, -maltosiden und anderen) und Alkyloligoglucosiden (-maltotriosiden, -tetraosiden und anderen). Alkylpolyglycoside sind unter anderem durch sauer katalysierte Reaktion (Fischer-Reaktion) aus Glucose (oder Stärke) oder aus *n*-Butylglucosiden mit Fettalkoholen zugänglich. Alkylpolyglycoside entsprechen der allgemeinen Formel (VII) 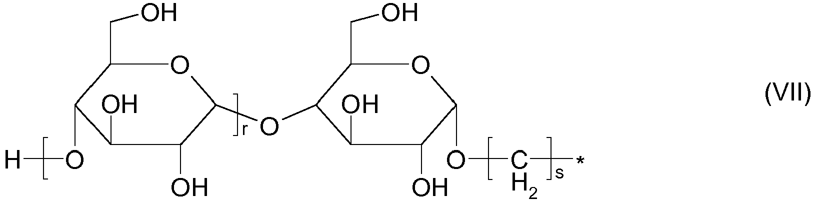 in der
r = 0 bis 3 und
s = 4 bis 20 ist.
Ein Beispiel ist Lutensol ® GD70.

In der Gruppe nichtionischer *N-*alkylierter, vorzugsweise *N*-methylierter, Fettsäureamide der allgemeinen Formel (VIII) 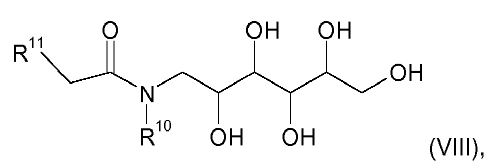 steht R¹⁰ für einen *n*-C₁₂-Alkyl-Rest, R¹¹ für einen Alkyl-Rest mit 1 bis 8 C-Atomen. R¹¹ ist vorzugsweise Methyl.

Eine Zusammensetzung wie beschrieben, die außerdem mindestens ein Desinfektionsmittel enthält, ist besonders bevorzugt. Dabei liegt das mindestens ein Desinfektionsmittel in einer (Gesamt-)Menge von 0,1 bis 20 Massen%, vorzugsweise von 1 bis 10 Massen% in der Zusammensetzung vor.

Desinfektionsmittel können sein: Oxidationsmittel, Halogene wie Chlor und Iod und diese freisetzende Stoffe, Alkohole wie Ethanol, 1-Propanol und 2-Propanol, Aldehyde, Phenole, Ethylenoxid, Chlorhexidin und Mecetroniummetilsulfat.

Der Vorteil der Verwendung von Desinfektionsmitteln besteht darin, dass sich Krankheitserreger auf der behandelten Oberfläche kaum verbreiten können. Krankheitserreger können sein: Bakterien, Sporen, Pilze und Viren.

Farbstoffe können neben anderen sein: Acid Blue 9, Acid Yellow 3, Acid Yellow 23, Acid Yellow 73, Pigment Yellow 101, Acid Green 1, Acid Green 25.

Bevorzugt ist eine Zusammensetzung, bei der der mindestens eine Farbstoff in einer (Gesamt-)Menge von 0,1 bis 20 Massen%, besonders bevorzugt von 1 bis 10 Massen% vorliegt.

Säuren sind Verbindungen die vorteilhaft zum Beispiel zum Lösen von bzw. zur Verhinderung von Kalkablagerungen verwendet werden. Beispiele für Säuren sind Ameisensäure, Essigsäure, Citronensäure, Salzsäure, Schwefelsäure und Sulfonsäure.

Basen sind Verbindungen, die vorteilhaft für das Einstellen des günstigen pH-Wertbereiches für Komplexbildner verwendet werden können. Beispiele für Basen, die erfindungsgemäß verwendet werden können, sind: NaOH, KOH und Aminethanol.

Als anorganische Builder eignen sich insbesondere:
- Kristalline und amorphe Alumosilikate mit ionenaustauschenden Eigenschaften, wie vor allem Zeolithe: Verschiedene Typen von Zeolithen sind geeignet, insbesondere die Zeolithe A, X, B, P, MAP und HS in ihrer Na-Form oder in Formen, in denen Na teilweise gegen andere Kationen wie Li, K, Ca, Mg oder Ammonium ausgetauscht ist;
- Kristalline Silikate, wie insbesondere Disilikate und Schichtsilikate, z.B. δ- und β-Na₂Si₂O₅. Die Silikate können in Form ihrer Alkalimetall-, Erdalkalimetall- oder Ammoniumsalze eingesetzt werden, bevorzugt sind die Na-, Li- und Mg-Silikate;
- Amorphe Silikate, wie Natriummetasilikat und amorphes Disilikat;
- Carbonate und Hydrogencarbonate: Diese können in Form ihrer Alkalimetall-, Erdalkalimetall- oder Ammoniumsalze eingesetzt werden. Bevorzugt sind Na-, Li- und Mg-Carbonate und -Hydrogencarbonate, insbesondere Natriumcarbonat und/oder Natriumhydrogencarbonat; sowie
- Polyphosphate, wie Pentanatriumtriphosphat.

Als oligomere und polymere Cobuilder eignen sich:
Oligomere und polymere Carbonsäuren, wie Homopolymere von Acrylsäure und Asparaginsäure, Oligomaleinsäuren, Copolymere der Maleinsäure mit Acrylsäure, Methacrylsäure oder C₂-C₂₂-Olefinen, z.B. Isobuten oder langkettigen α-Olefinen, Vinyl-C₁-C₈-alkylether, Vinylacetat, Vinylpropionat, (Meth)Acrylsäureester von C₁-C₈-Alkoholen und Styrol. Bevorzugt sind die Homopolymere der Acrylsäure und Copolymere von Acrylsäure mit Maleinsäure. Die oligomeren und polymeren Carbonsäuren werden in Säureform oder als Natriumsalz eingesetzt

Komplexbildner sind Verbindungen, die Kationen zu binden vermögen. Dies kann genutzt werden, um die Härte des Wassers zu verringern und um störende Schwermetallionen auszufällen. Beispiele für Komplexbildner sind NTA, EDTA, MGDA, DTPA, DTPMP, IDS, HEDP, β-ADA, GLDA, Zitronensäure, Oxoidibernsteinsäure und Butantetracarbonsäure. Der Vorteil des Einsatzes dieser Verbindungen liegt darin, dass viele reinigungsaktive Verbindungen in weichem Wasser bessere Wirkung erzielen; außerdem kann durch Verringerung der Wasserhärte das Auftreten von Kalkablagerungen nach der Reinigung vermieden werden. Durch Verwendung dieser Verbindungen entfällt somit die Notwendigkeit des Trocknens einer gereinigten Oberfläche. Dies ist vom Arbeitsablauf her vorteilhaft und insbesondere deshalb erstrebenswert, da auf diese Weise die zur Konservierung aufgebrachte erfindungsgemäße Zusammensetzung nicht teilweise wieder entfernt wird. Im Falle der Behandlung von Textilien bleiben die Fasern beweglicher, so dass sich ein besseres Tragegefühl einstellt.

Geeignete Vergrauungsinhibitoren sind beispielsweise Carboxymethylcellulose und Pfropfpolymere von Vinylacetat auf Polyethylenglykol.

Geeignete Bleichmittel sind beispielsweise Addukte von Wasserstoffperoxid an anorganische Salze, wie Natriumperborat-Monohydrat, Natriumperborat-Tetrahydrat und Natriumcarbonat-Perhydrat, und Percarbonsäuren, wie Phthalimidopercapronsäure.

Als Bleichaktivatoren eignen sich z.B. N,N,N',N'-Tetraacetylethylendiamin (TAED), Natrium-p-nonanoyloxybenzolsulfonat und N-Methylmorpholiniumacetonitrilmethylsulfat.

Geeignete Enzyme sind beispielsweise Proteasen, Lipasen, Amylasen, Cellulasen, Mannanasen, Oxidasen und Peroxidasen.

Als Farbübertragungsinhibitoren geeignet sind beispielsweise Homo-, Co- und Pfropfpolymere von 1-Vinylpyrrolidon, 1-Vinylimidazol oder 4-Vinylpyridin-N-oxid. Auch mit Chloressigsäure umgesetzte Homo- und Copolymere des 4-Vinylpyridins eignen sich als Farbübertragungsinhibitoren.

Biozide sind Verbindungen, die Bakterien abtöten. Ein Beispiel für ein Biozid ist Glutaraldehyd. Der Vorteil der Verwendung von Bioziden liegt darin, dass sie der Verbreitung von Krankheitserregern entgegenwirken.

Hydrotrope sind Verbindungen, die die Löslichkeit des Tensides / der Tenside in der chemischen Zusammensetzung verbessern. Ein Beispiel für ein Hydrotrop ist Cumolsulfonat.

Verdickungsmittel sind Verbindungen, die die Viskosität der chemischen Zusammensetzung erhöhen. Nichteinschränkende Beispiele für Verdickungsmittel sind: Polyacrylate und hydrophob modifizierte Polyacrylate. Der Vorteil der Verwendung von Verdickungsmitteln liegt darin, dass Flüssigkeiten mit höherer Viskosität auf geneigten oder vertikalen Oberflächen eine höhere Verweilzeit aufweisen als Flüssigkeiten mit niedrigerer Viskosität. Dies erhöht die Wechselwirkungszeit zwischen Zusammensetzung und zu reinigender Oberfläche.

Die Verwendung der erfindungsgemäßen Mikrokapseln zur Herstellung der erfindungsgemäßen chemischen Zusammensetzung bildet einen weiteren Gegenstand der Erfindung.

Ein weiterer Gegenstand der vorliegenden Erfindung ist die Verwendung von erfindungsgemäßen Mikrokapseln zur Behandlung von Oberflächen. Bevorzugt ist dabei eine Verwendung, bei der die zu behandelnde Oberfläche ausgewählt ist aus der Gruppe bestehend aus Fasern, Vliesen, Schaumstoffen, Fliesen, Kacheln, Marmor, Keramik, Beton, Kunststoff, Metall, Email, Glas. Besonders bevorzugt ist eine Verwendung, bei der der zu behandelnde Gegenstand ein Textil ist, eine Verwendung also in einem Waschmittel oder in einem Weichspüler erfolgt.

Daher ist auch die Verwendung von erfindungsgemäßen Mikrokapseln und insbesondere die Verwendung einer chemischen Zusammensetzung enthaltend erfindungsgemäße Mikrokapseln in der Textilwäsche ein besonders bevorzugter Gegenstand der vorliegenden Erfindung.

Weiterer Gegenstand der vorliegenden Erfindung ist ein Gegenstand, der erfindungsgemäße Mikrokapseln aufweist und bevorzugt ist ein Gegenstand der die erfindungsgemäßen Mikrokapseln auf seiner Oberfläche aufweist.

Als Gegenstand geeignet ist dabei jeder Körper, bei dem es gewünscht ist, dass er bei Berührung, d.h. bei Druckbelastung einen bestimmten Geruch abgibt. Nichtabschließende Beispiele sind: Verpackungsmaterial aller Art wie Karton, Folie, Klebstoff, Klebeetiketten, Reinigungstücher, Vliese, Lederprodukte, Farben und Lacke, Kosmetikprodukte, jegliche Art von Behältern, insbesondere solchen, die Lebensmittel oder Kosmetika enthalten, Glas, Kunststoffteilen, Autos usw.

Die Erfindung wird im Folgenden durch Beispiele weiter beschrieben:
Angaben in % bezeichnen Gewichtsprozent, wenn nicht ausdrücklich anders angegeben.

### Beispiele

Für die Herstellung der Mikrokapseln wurden folgende Stoffe verwendet:
Öl:
   hochdruckhydriertes Mineralöl mit einer Viskosität von ca. 68 mm²/s bei 40 °C und einem Erstarrungspunkt von -21 °C (Weißöl).

### Riechstoff:

### (Bestandteile jeweils in Gew.-%)

### Riechstoff A

### Aufblühende Bestandteile [Gew.-%]:

beta-Pinen 0,09 Citronellol 2,54 Citronellylacetat 1,04 Decylaldehyd 2,00 delta-Damascon 0,10 Dihydromyrcenol 6,75 Geranylnitril 9,29 d-Limonen 22,90 Lorysia 0,74 Lymolen 9,73 Methylnonylacetaldehyd 2,07 Paracymen 0,17 Terpineolen 11,44 Verdox 3,38

### Verzögert aufblühende Bestandteile:

Allylamylglycolat 0,14 alpha-Terpineol 0,38 Anisaldehyd 0,18 Ethylbutyrat 0,01 Ethyl-2-methylbutyrat 0,26 Ethyl-2-methylpentanoat 0,34 Eucalyptol 1,36 Floracetat 1,81 Fruten 1,30 Geraniol 6,33 Ligustral 2,16 Linalool 1,03 Methylpampelmuse 1,48 Octylaldehyd 1,43 Prenylacetat 0,46 Triplal 0,14

### Basismaskierende Bestandteile

Citrathal 1,18 Habanolid 100 % 0,74 beta-Ionon 0,37 Iso-E-Super 0,74 Neobutenon 0,03

### Weiterer Bestandteil:

Methyldihydrojasmonat 5,89

### Riechstoff B:

### Aufblühende Bestandteile:

beta-Pinen 0,08 Citronellylacetat 3,97 Decylaldehyd 1,75 delta-Damascon 0,39 Geranylnitril 4,12 d-Limonen 17,70 Lorysia 1,40 Lymolen 8,50 Paracymen 0,15 Terpineolen 10,00 Tetrahydrolinalool 13,52

### Verzögert aufblühende Bestandteile:

Allylamylglycolat 0,12 Allylcaproat 1,59 Ethyl-2-methylbutyrat 5,57 Eucalyptol 0,63 Floracetat 2,11 Fruten 2,11 Geraniol 2,70 Ligustral 4,05 Linalool 0,90 Methylpampelmuse 1,31 Octylaldehyd 1,25 Phenylethylalkohol 0,45 Prenylacetat 0,40 Violiff 0,79

### Basismarkierende Bestandteile:

Citrathal 0,38 Clonal 0,16 Cyclabut 1,59 Florhydral 0,08 Nectaryl 2,39 Neobutenon 0,16

### Weiterer Bestandteil:

Methyldihydrojasmonat 9,68

### Riechstoff C:

Limonene 100

### Riechstoff D:

Citronellal 100

### Schutzkolloide:

Schutzkolloid 1: Methylhydroxypropylcellulose (mit einer Viskosität nach Brookfield (bei 20 °C, 20 rpm, 2 %-ig) von 90-125 mPas), 5 Gew.% Lösung in Wasser.
Schutzkolloid 2: Polyvinylalkohol-Lösung: 10 Gew.% in Wasser, Hydrolysegrad 79 %, mittlerer Polymerisationsgrad PW: 1900

### Monomerenabkürzungen:

- MMA: Methylmethacrylat
- MAS: Methacrylsäure
- BDA2: 1,4-Butandioldiacrylat
- PETIA: Pentaerythrittriacrylat
- EGDMA: Ethylenglykcoldimethacrylat
- DMAEMA: N,N-Dimethylaminoethylmethacrylat

### Beispiel 1 (entspricht Verfahren 1):

EGDMA
40/20/40 MMA/MAS/EGDMA Weißöl

Zunächst wurde die Wasser- und die Ölphase separat mit folgender Zusammensetzung hergestellt:
Wasserphase:
   - 207,0 g: Wasser
   - 120,33g: Schutzkolloid 1
   - 60,20 g: Schutzkolloid 2
   - 1,12 g: einer 2,5 gew.-%igen wässrigen Natriumnitrit-Lösung
Ölphase:
   - 144 g: Riechstoff A
   - 96 g: Öl
   - 24,0 g: Methylmethacrylat
   - 12,0 g: Methacrylsäure
   - 24,55 g: 98 gew.-%igen wässrigen EGDMA Lösung
   - 1,20 g: tert-Butylperneodecanoat

Zulauf 1:
   3,6 g einer 10 gew.-%igen wässrigen tert-Butylhydroperoxidlösung in Kohlenwasserstoffen
Zulauf 2:
   - 16,25g: einer 2%igen wässrigen Ascorbinsäure-Lösung

Bei Raumtemperatur wurde die Wasserphase vorgelegt. Nach Zugabe der Ölphase wurde mit einem Dissolverrührer bei 3500 Upm für 40 Minuten dispergiert. Die entstandene Emulsion wurde unter Rühren mit einem Ankerrüher in 60 Minuten auf 50 °C, innerhalb von weiteren 60 Minuten auf 75 °C aufgeheizt und für zwei Stunde bei 75 °C gehalten. Zu der entstandenen Mikrokapseldispersion wurde unter Rühren Zulauf 1 dazugegeben. Der Zulauf 2 wurde in 50 Minuten dosiert zugegeben, währenddessen in 60 Minuten auf Raumtemperatur abgekühlt .Die entstandene Mikrokapseldispersion besaß einen Feststoffgehalt von 44,9 % und eine mittlere Teilchengröße 2,13 µm (gemessen mit Fraunhoferbeugung, Volumenmittelwert).

### Beispiel 2 (entspricht Verfahren 2):

PETIA
30/40/30 MMA/PETIA/MAS Weißöl

Zunächst wurde die Wasser- und die Ölphase separat mit folgender Zusammensetzung hergestellt:
Wasserphase:
   - 271,62 g: Wasser
   - 82,19 g: Schutzkolloid 1
   - 20,55 g: Schutzkolloid 2
   - 0,91 g: einer 2,5 gew.-%igen wässrigen Natriumnitrit-Lösung
Ölphase:
   - 120 g: Riechstoff A
   - 70,28g: Öl
   - 14,31 g: MMA
   - 19,09 g: PETIA
   - 14,31 g: MAS
   - 0,95 g: tert-Butylperneodecanoat
Zulauf 1:
   - 2,33 g: einer 10 gew.-%igen wässrigen tert-Butylhydroperoxidlösung
Zulauf 2:
   - 12,24 g: einer 1 %igen wässrigen Ascorbinsäure-Lösung

Bei Raumtemperatur wurde die Wasserphase vorgelegt. Nach Zugabe der Ölphase wurde mit einem Dissolverrührer bei 3500 Upm für 40 Minuten dispergiert. Die entstandene Emulsion wurde unter Rühren mit einem Ankerrüher in 60 Minuten auf 70 °C, innerhalb von weiteren 60 Minuten auf 85 °C aufgeheizt und für ein Stunde bei 85 °C gehalten. Zu der entstandenen Mikrokapseldispersion wurde unter Rühren Zulauf 1 dazugegeben. Der Zulauf 2 wurde in 50 Minuten dosiert zugegeben, währenddessen in 60 Minuten auf Raumtemperatur abgekühlt .Die entstandene Mikrokapseldispersion besaß einen Feststoffgehalt von 40,7 % und eine [0,9] Teilchengröße 2,9 µm (gemessen mit Fraunhoferbeugung, Volumenmittelwert).

Die Beispiele X1 und X2 illustrieren die vorliegende Erfindung in der Herstellung von Mikrokapseln mit höherer Riechstoffbeladung gemäß der Verfahren 1 bzw. 2. In diesen Beispielen wurde der Massenanteil der Ölphase konstant gehalten und bestand nur aus Riechstoff und Monomeren. Die Menge an Lösungsmittel wurde durch die Menge an Riechstoff ersetzt, was die Beladung der Mikrokapsel mit Riechstoff erhöht. Dies ermöglicht es die Konzentration des Riechstoffes einzustellen. Diese Art der Veränderung der Riechstoffbeladung kann für verschiedene Arten von Kapselwänden verwendet werden.

Die Beispiele 6, 7, 10 und 11 sind Referenzbeispiele.

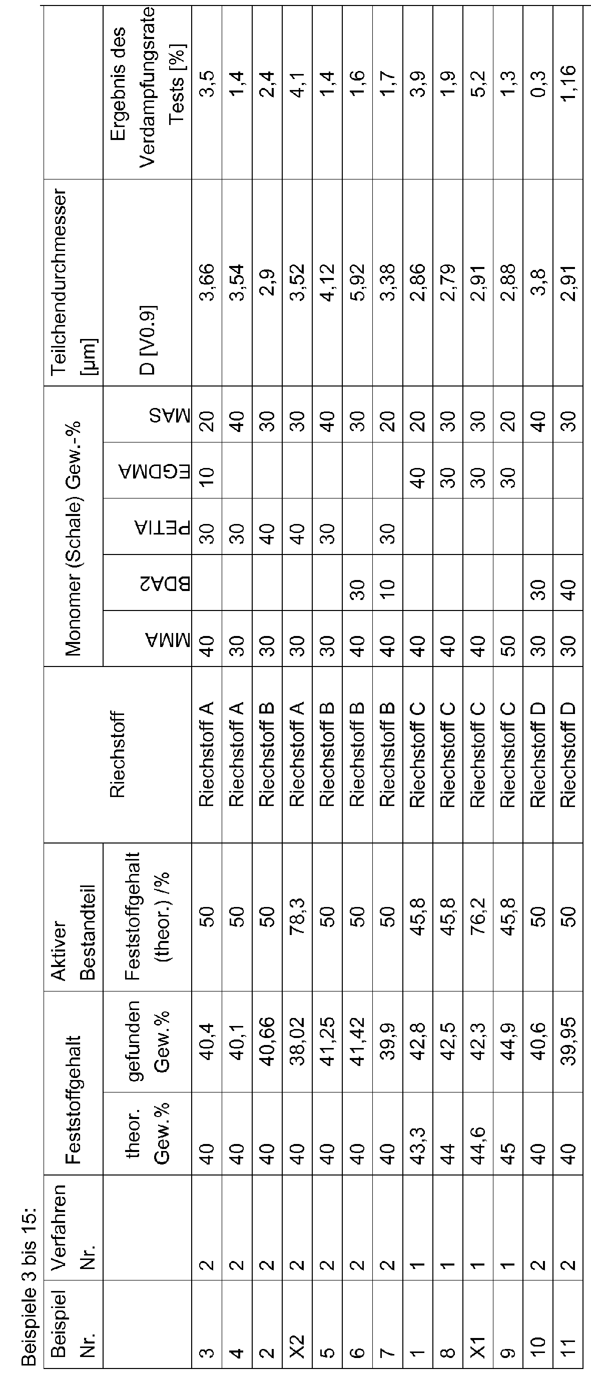

### Beispiel 16:

Herstellung und anwendungstechnische Prüfung von Weichspüler:
Distearyldimethylammoniumchlorid (75% Aktivgehalt) wurde zunächst bei 45°C auf 7% Aktivgehalt verdünnt, abgekühlt auf 25°C und dann mit 0,6% des Riechstoffs (Aktivgehalt) unter Rühren versetzt. Die Herstellung der Weichspülformulierung erfolgte in Fall A) mit der freien Duftstoffmischung, im Fall B) mit der erfindungsgemäß verkapselten Duftstoffmischung aus Beispiel 11.
Die so hergestellten Weichspülformulierungen wurden anschließend in einer Waschmaschine (Miele) getestet (3.5 kg Handtücher, aus Baumwolle, vorgewaschen mit einem Flüssigwaschmittel, nicht parfümiert, bei 40°C, 16°dH, im Nachspülgang Zugabe der Weichspülformulierung A bzw. B in einer Menge von 50ml, Trocknung im Ablufttrockner der Fa. Miele mit der Einstellung "Schranktrocken").

### Analyse des Freisetzungsverhaltens:

Der Dufteindruck an mind. 5 Handtücher wurde vor und nach dem Reiben mit den Händen sensorisch beurteilt (vgl. Bewertungsskala). Der daraus gebildete Mittelwert ist angegeben. Die Beurteilung wurde jeweils nach Lagerung 1 Woche / 2 Wochen / 4 Wochen wiederholt.

### Definition der Bewertungsskala:

### Zahl Bewertung

1 Sehr geringe Geruchswahrnehmung
2 Deutliche Geruchswahrnehmung
3 Starke Geruchswahrnehmung

### Vor dem Reibeexperiment

1 Woche / 2 Wochen / 4 Wochen
   A) 1 / 1 / 1
   B)2/2/1

### Nach dem Reibeexperiment

1 Woche / 2 Wochen / 4 Wochen
   A) 1 / 1 / 1
   B)3/2/2

Es zeigt sich deutlich, dass das erfindungsgemäße Produkt bei längerer Lagerdauer und durch mechanische Beanspruchung eine verbesserte Duftfreisetzung aufweist.

### Beispiel 17:

Herstellung und anwendungstechnische Prüfung eines Flüssigwaschmittels

100g eines nichtionischen Tensids (C₁₃-C₁₅ Alkohol, ethoxyliert mit 7 EO) werden vorgelegt und auf 50°C erwärmt. Anschließend werden nacheinander 80g 1,2-Propandiol, 85g einer Kokosölfettsäure und 44g Kaliumhydroxid eingerührt. Die gesamte Mischung wird nun mit 507g Wasser, welches auf 45°C erwärmt ist, versetzt. Weiterhin werden dann 134g einer Alkylbenzolsulfonsäure sowie 30g Natriumcitrat eingerührt. Nach dem Abkühlen auf Raumtemperatur werden noch 20g Ethanol der Mischung zugefügt. Zu dieser Flüssigwaschmittelformulierung werden im Fall C) 4,5g einer freien Duftstoffmischung eingerührt, im Fall D) 4,5g einer verkapselten Duftstoffmischung (Aktivgehalt).

Die so hergestellten Flüssigwaschmittelformulierungen wurden anschließend in einer Waschmaschine (Miele) getestet (3.5 kg Handtücher, aus Baumwolle, bei 40°C, 16°dH, ohne Nachspülbad, 95ml der Formulierung C) bzw. D), Trocknung im Ablufttrockner der Fa. Miele mit der Einstellung "Schranktrocken").

### Analyse des Freisetzungsverhaltens

Der Dufteindruck an mind. 5 Handtücher wurde vor und nach dem Reiben mit den Händen sensorisch beurteilt (vgl. Bewertungsskala). Der daraus gebildete Mittelwert ist angegeben.

### Vor dem Reibeexperiment

1 Woche / 2 Wochen / 4 Wochen
   A) 1 / 1 / 1
   B) 2 / 1 / 1

Nach dem Reibeexperiment
1 Woche / 2 Wochen / 4 Wochen
   A) 1 / 1 / 1
   B)2/2/2

Es zeigt sich deutlich, dass das erfindungsgemäße Produkt bei längerer Lagerdauer und durch mechanische Beanspruchung eine verbesserte Duftfreisetzung aufweist.

## Patentansprüche

1. Mikrokapsel, umfassend einen Kern a), der einen Duft- oder Riechstoff enthält, und eine Schale b), wobei b) erhältlich ist durch Polymerisation von einem oder mehreren C₁-C₂₄-Alkylester/n der Acryl- und/oder Methacrylsäure und Methacrylsäure MAS, wobei die MAS in einer Menge von 20 bis 60 Massen% in der Schale vorliegt, und von mindestens einer der folgenden Komponenten: Pentaerythrittriacrylat (PETIA) in einer Menge von 10 bis 50 Massen% und/oder Ethylenglycoldimethacrylat (EGDMA) in einer Menge von 10 bis 50 Massen%, wobei die (Gesamt-)Menge von PETIA und EGDMA mindestens 30 Massen% in der Schale einpolymerisiert vorliegt.

2. Mikrokapsel nach Patentanspruch 1, bei dem ein C₁-C₂₄-Alkylester der Acryl- und/oder Methacrylsäure und
MAS in einer Menge von 25 bis 50 Massen% und von mindestens einer der folgenden Komponenten:
PETIA in einer Menge von 20 bis 40 Massen% und/oder
EGDMA in einer Menge von 20 bis 40 Massen%, wobei die (Gesamt-)Menge von PETIA und EGDMA mindestens 30 Massen% in der Schale einpolymerisiert vorliegt.

3. Mikrokapsel nach Patentanspruch 1 oder 2, bei dem der C₁-C₂₄-Alkylester der Acryl- und/oder Methacrylsäure Methylmethacrylat ist und
MAS in einer Menge von 35 bis 45 Massen% und von mindestens einer der folgenden Komponenten:
PETIA in einer Menge von 25 bis 35 Massen% und/oder
EGDMA in einer Menge von 25 bis 35 Massen%, wobei die (Gesamt-)Menge von PETIA und EGDMA mindestens 30 Massen% in der Schale einpolymerisiert vorliegt.

4. Mikrokapsel nach einem der Ansprüche 1 bis 3, bei der der mittlere Durchmesser im Bereich von 0,8 bis 100 µm liegt.

5. Mikrokapsel nach einem der Ansprüche 1 bis 4, bei der das Verhältnis der Dicke der Schale zum Durchmesser der Mikrokapsel im Bereich von 0,005 bis 0,1 liegt.

6. Chemische Zusammensetzung enthaltend Mikrokapseln gemäß einem der Ansprüche 1 bis 5.

7. Chemische Zusammensetzung nach Anspruch 6, die mindestens einen Stoff enthält, der ausgewählt ist aus der Gruppe bestehend aus Tensiden, Desinfektionsmitteln, Farbstoffen, Säuren, Basen, Komplexbildnern, Bioziden, Hydrotropen, Verdickungsmitteln, Buildern, Cobuildern, Enzymen, Bleichmitteln, Bleichaktivatoren, Korrosionsinhibitoren, Bleichkatalysatoren, Farbschutzadditiven, Farbübertragungsinhibitoren, Vergrauungsinhibitoren, Soil-Release-Polymere, Faserschutzadditiven, Siliconen, Bakterizide und Konservierungsmitteln, organische Lösemittel, Löslichkeitsvermittler, Auflösungsverbesserer und Parfüm.

8. Verwendung von Mikrokapseln gemäß einem der Ansprüche 1 bis 5 zur Herstellung einer Zusammensetzung gemäß einem der Ansprüche 6 bis 7.

9. Verwendung von Mikrokapseln gemäß einem der Ansprüche 1 bis 5 zur Behandlung von Oberflächen.

10. Verwendung von Mikrokapseln gemäß einem der Ansprüche 1 bis 5 in der Textilwäsche.

11. Verwendung einer chemischen Zusammensetzung gemäß einem der Ansprüche 6 bis 7 in der Textilwäsche.

12. Gegenstand, der Mikrokapseln gemäß einem der Ansprüche 1 bis 5 aufweist.

13. Gegenstand nach Anspruch 12, der die Mikrokapseln auf seiner Oberfläche aufweist.

## Claims

1. A microcapsule comprising a core a) which comprises a fragrance or odorant, and a shell b), b) being obtainable by polymerizing one or more C₁-C₂₄-alkyl ester(s) of acrylic acid and/or methacrylic acid and
methacrylic acid MAA, the MAA being present in the shell in an amount of 20 to 60% by mass, and at least one of the following components:
pentaerythrityl triacrylate (PETIA) in an amount of 10 to 50% by mass and/or
ethylene glycol dimethacrylate (EGDMA) in an amount of 10 to 50% by mass, where the (total) amount of PETIA and EGDMA at least 30% by mass is present in the shell in copolymerized form.

2. The microcapsule according to claim 1, in which a C₁-C₂₄-alkyl ester of acrylic acid and/or methacrylic acid and
MAA in an amount of 25 to 50% by mass and of at least one of the following components:
PETIA in an amount of 20 to 40% by mass and/or
EGDMA in an amount of 20 to 40% by mass, where the (total) amount of PETIA and EGDMA at least 30% by mass is present in the shell in copolymerized form.

3. The microcapsule according to claim 1 or 2, in which the C₁-C₂₄-alkyl ester of acrylic acid and/or methacrylic acid is methyl methacrylate, and
MAA in an amount of 35 to 45% by mass and of at least one of the following components:
PETIA in an amount of 25 to 35% by mass and/or
EGDMA in an amount of 25 to 35% by mass, where the (total) amount of PETIA and EGDMA at least 30% by mass is present in the shell in copolymerized form.

4. The microcapsule according to any one of claims 1 to 3, in which the mean diameter is in the range from 0.8 to 100 µm.

5. The microcapsule according to any one of claims 1 to 4, in which the ratio of the thickness of the shell to the diameter of the microcapsule is in the range from 0.005 to 0.1.

6. A chemical composition comprising microcapsules according to any one of claims 1 to 5.

7. The chemical composition according to claim 6, which comprises at least one substance selected from the group consisting of surfactants, disinfectants, dyes, acids, bases, complexing agents, biocides, hydrotropes, thickeners, builders, cobuilders, enzymes, bleaches, bleach activators, corrosion inhibitors, bleach catalysts, color protection additives, dye transfer inhibitors, graying inhibitors, soil release polymers, fiber protection additives, silicones, bactericides and preservatives, organic solvents, solubilizers, dissolution improvers and perfume.

8. The use of microcapsules according to any one of claims 1 to 5 for producing a composition according to any one of claims 6 to 7.

9. The use of microcapsules according to any one of claims 1 to 5 for treating surfaces.

10. The use of microcapsules according to any one of claims 1 to 5 in textile laundry.

11. The use of a chemical composition according to either of claims 6 and 7 in textile laundry.

12. An article comprising microcapsules according to any one of claims 1 to 5.

13. The article according to claim 12, which has the microcapsules on its surface.

## Revendications

1. Microcapsule, comprenant un noyau a), qui contient une substance parfumée ou odoriférante, et une coquille b), b) pouvant être obtenue par polymérisation d'un ou de plusieurs esters C₁-C₂₄-alkyliques de l'acide acrylique et/ou méthacrylique et d'acide méthacrylique MAS, le MAS se trouvant en une quantité de 20 à 60% en masse dans la coquille, et d'au moins un des composants suivants : triacrylate de pentaérythritol (PETIA) en une quantité de 10 à 50% en masse et/ou diméthacrylate d'éthylèneglycol (EGDMA) en une quantité de 10 à 50% en masse, la quantité (totale) de PETIA et d'EGDMA au moins 30% en masse se trouvant sous forme copolymérisée dans la coquille.

2. Microcapsule selon la revendication 1, dans laquelle un ester C₁-C₂₄-alkylique de l'acide acrylique et/ou méthacrylique et
du MAS en une quantité de 25 à 50% en poids et d'au moins un des composants suivants :
PETIA en une quantité de 20 à 40% en masse et/ou
EGDMA en une quantité d'au moins 20 à 40% en masse, la quantité (totale) de PETIA et d'EGDMA d'au moins 30% en masse se trouvant sous forme copolymérisée dans la coquille.

3. Microcapsule selon la revendication 1 ou 2, dans laquelle l'ester C₁-C₂₄-alkylique de l'acide acrylique et/ou méthacrylique est le méthacrylate de méthyle et
du MAS en une quantité de 35 à 45% en poids et d'au moins un des composants suivants :
PETIA en une quantité de 25 à 35% en masse et/ou
EGDMA en une quantité de 25 à 35% en masse, la quantité (totale) de PETIA et d'EGDMA d'au moins 30% en masse se trouvant sous forme copolymérisée dans la coquille.

4. Microcapsule selon l'une quelconque des revendications 1 à 3, dans laquelle le diamètre moyen se situe dans la plage de 0,8 à 100 µm.

5. Microcapsule selon l'une quelconque des revendications 1 à 4, dans laquelle le rapport de l'épaisseur de la coquille au diamètre de la microcapsule se situe dans la plage de 0,005 à 0,1.

6. Composition chimique contenant des microcapsules selon l'une quelconque des revendications 1 à 5.

7. Composition chimique selon la revendication 6, qui contient au moins une substance qui est choisie dans le groupe constitué par les tensioactifs, les désinfectants, les colorants, les acides, les bases, les complexants, les biocides, les hydrotropes, les épaississants, les adjuvants, les coadjuvants, les enzymes, les agents de blanchiment, les activateurs de blanchiment, les inhibiteurs de corrosion, les catalyseurs de blanchiment, les additifs de protection de la couleur, les inhibiteurs de transfert de couleur, les inhibiteurs de grisaillement, les polymères antisalissure, les additifs de protection des fibres, les silicones, les bactéricides et les conservateurs, les solvants organiques, les promoteurs de solubilisation, les agents d'amélioration de la dissolution et le parfum.

8. Utilisation de microcapsules selon l'une quelconque des revendications 1 à 5 pour la préparation d'une composition selon l'une quelconque des revendications 6 à 7.

9. Utilisation de microcapsules selon l'une quelconque des revendications 1 à 5 pour le traitement de surfaces.

10. Utilisation de microcapsules selon l'une quelconque des revendications 1 à 5 dans le lavage de textiles.

11. Utilisation d'une composition chimique selon l'une quelconque des revendications 6 à 7 dans le lavage de textiles.

12. Objet qui présente des microcapsules selon l'une quelconque des revendications 1 à 5.

13. Objet selon la revendication 12, qui présente les microcapsules sur sa surface.
